Europäisches Patentamt

European Patent Office

Office européen des brevets

(11) Publication number: **0 062 070**
**A1**

## EUROPEAN PATENT APPLICATION

published in accordance with Art. 158(3) EPC

(21) Application number: **81902757.4**

(22) Date of filing: **07.10.81**

Data of the international application taken as a basis:

(86) International application number:
**PCT/JP 81/00268**

(87) International publication number:
**WO 82/01156 (15.04.82 82/10)**

(51) Int. Cl.³: **B 25 J 15/00**

(30) Priority: **08.10.80 JP 139915/80**

(43) Date of publication of application: **13.10.82**
**Bulletin 82/41**

(84) Designated Contracting States: **DE FR GB**

(71) Applicant: **FUJITSU FANUC LIMITED, 5-1, Asahigaoka, 3-chome, Hino-shi, Tokyo 191 (JP)**

(72) Inventor: **INABA, Hajimu, 5-3-16, Asahigaoka, Hino-shi Tokyo 191 (JP)**
Inventor: **SAKAKIBARA, Shinsuke, 1-2-12-6, Naka Kunitachi-shi, Tokyo 186 (JP)**
Inventor: **NIHEI, Ryo, 1-34-7-202, Honcho Kichijoji, Musashino-shi Tokyo 180 (JP)**

(74) Representative: **Blumbach Weser Bergen Kramer Zwirner Hoffmann Patentanwälte, Radeckestrasse 43, D-8000 München 60 (DE)**

(54) **DEVICE FOR OPERATING HAND OF INDUSTRIAL ROBOT.**

(57) A device for operating the hand of an industrial robot, in which a hydraulic cylinder is provided as a mechanism for driving the hand, the cylinder is constructed in multi-cylinder or multi-stage configuration, and the fluid supply to the multi-series or multi-stage cylinders is varied on the basis of the instructions of the holding force set in the teaching mode of the robot, thereby enabling control of the holding force of the hand in multiple steps.

EP 0 062 070 A1

0062070

## DESCRIPTION

TITLE OF THE INVENTION

A Device for Operating a Hand of an Industrial Robot

TECHNICAL FIELD

The present invention relates to a device for operating a hand of an industrial robot. More particularly, it relates to a device for operating a hand of an industrial robot in which the grasping force can be controlled stepwisely.

BACKGROUND ART

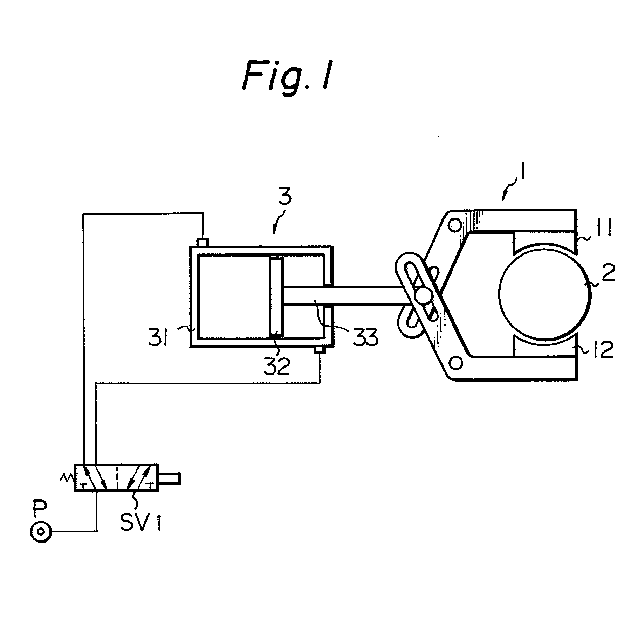

As a device for operating a hand of an industrial robot, there has heretofore been used one in which, as illustrated in Fig. 1, an air cylinder is driven by a fixed pneumatic pressure so as to generate the grasping force of the hand.

In the device for operating the hand of the industrial robot as shown in Fig. 1, a finger-driving mechanism 1 is so constructed as to open or close the finger portions 11 and 12 in accordance with the movement of the piston 31 of the air cylinder 3. Accordingly, the force with which the finger portions 11 and 12 grasp an article to be gripped 2 is determined by the thrust F of the air cylinder 3. This thrust F is given by the following expression:

$$F = S \cdot P \cdot \eta$$

Here, S denotes the pressure-receiving area of the piston, P the pneumatic pressure in the cylinder, and $\eta$ the efficiency.

Accordingly, the thrust F is uniquely determined by the feed pressure of the air so that the grasping force of the hand becomes constant. Therefore, in the device for operating the hand of the industrial robot as shown in Fig. 1, the article to be gripped 2 is gripped with a constant grasping force which is determined by the feed pressure of the air P. This leads to a problem in which the grasping force cannot be switched in accordance with the state of the article to be gripped, and in some cases the article to be gripped is broken.

DISCLOSURE OF THE INVENTION

The principal object of the present invention is to provide a device for operating a hand of an industrial robot in which the grasping force can be controlled in accordance with the state of the article to be gripped, in view of the problem of the prior art described above and on the basis of the idea that concept of a fluid pressure cylinder having a multi-throw (tandem) or multistage (telescopic) arrangement.

In accordance with the present invention, there is provided a device for operating a hand of an industrial robot, comprising a fluid pressure cylinder as a driving mechanism of the hand of the industrial robot, said fluid pressure cylinder having a multi-throw or a multistage arrangement, the fluid supply to said cylinder having a multi-throw or a multistage arrangement varying in accordance with the grasping force selected in a teaching mode of said industrial robot, whereby the grasping force of said hand is adapted so that it can be controlled stepwisely.

BRIEF DESCRIPTION OF THE DRAWINGS

Figure 1 illustrates a driving mechanism for a hand of an industrial robot of a prior-art;

Fig. 2 illustrates a diagram of the drive flow of a device for operating a hand of an industrial robot in accordance with a first embodiment of the present invention;

Fig. 3 illustrates the operating modes of the hand of Figure 2;

Fig. 4 illustrates a diagram of the drive flow of a device for operating a hand of an industrial robot in accordance with a second embodiment of the present invention;

Fig. 5 illustrates the operating modes of the hand of Figure 4; and

Fig. 6 illustrates a control-flow diagram of an industrial robot having the hand of Fig. 2.

BEST MODE FOR CARRYING OUT THE INVENTION

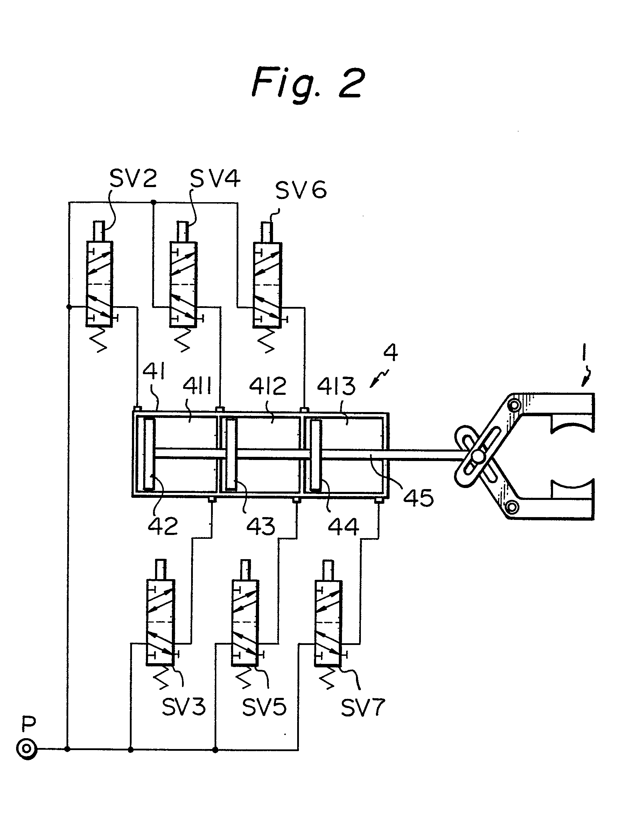

A device for operating a hand of an industrial robot in accordance with an embodiment of the present invention is illustrated in Figure 2. In the hand of Fig. 2, an air cylinder having a three-throw arrangement 4 is employed as the driving air cylinder of the finger-driving mechanism 1. In the cylinder having a three-throw arrangement 4, the casing 41 thereof is partitioned into three compartments 411, 412 and 413; pistons 42, 43 and 44 are, respectively, arranged in the compartments; and the respective pistons are connected by a common shaft 45. The operation of supplying air to the compartments 411, 412 and 413 of the air cylinder is controlled by solenoid valves $SV_2$ , $SV_3$ , ..., and $SV_7$.

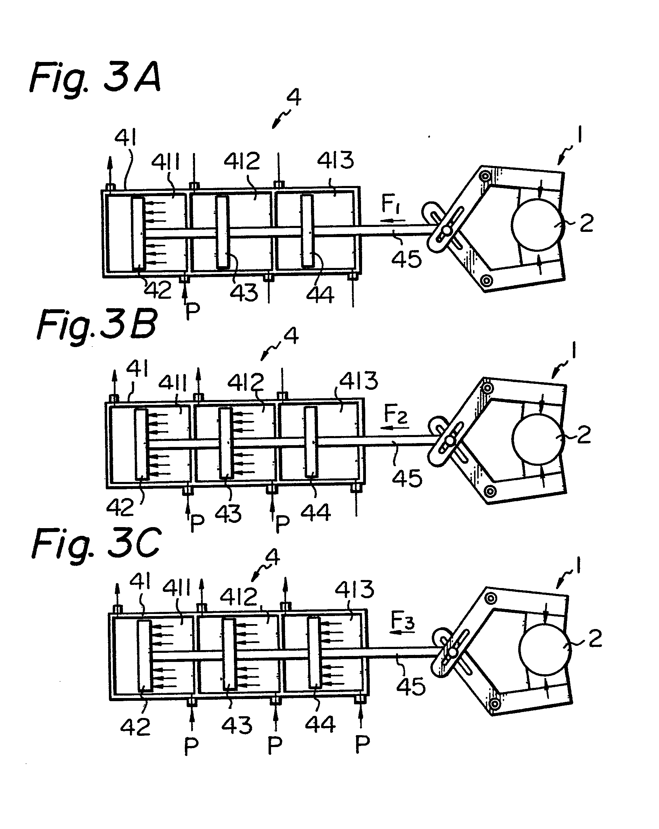

In Fig. 3, the modes in which the grasping force is switched in the device for operating the hand of Figure 2 are illustrated. In Fig. 3(A), only the first compartment 411 of the cylinder having a three-throw arrangement 4 is fed with a pneumatic pressure P; in (B), the first compartment 411 and the second compartment 412 are fed with a pneumatic pressure P; and in (C), the first compartment 411, the second compartment 412 and the third compartment 413 are all fed with a pneumatic pressure P. Accordingly, when $F_1$ , $F_2$ and $F_3$ denote the thrusts of the cylinder 4 in (A), (B) and (C), respectively, they are expressed by the following:

$$F_1 = P \cdot S \cdot \eta$$
$$F_2 = 2P \cdot S \cdot \eta$$
$$F_3 = 3P \cdot S \cdot \eta$$

Accordingly, the grasping force can be switched in three stages in the device for operating the hand of Fig. 2.

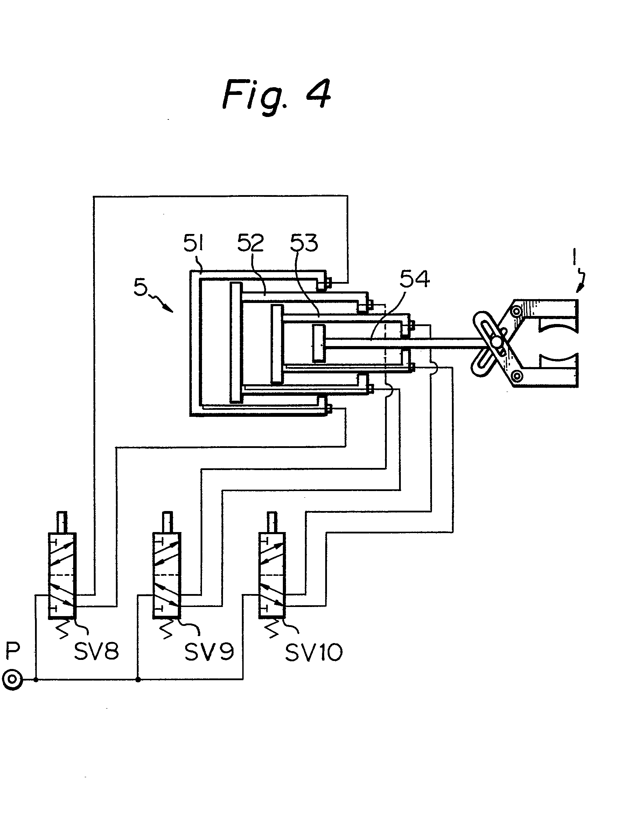

Another embodiment of a device for operating a hand of an industrial robot according to the present invention is illustrated in Fig. 4. In the hand of Fig. 4, a cylinder having a multistage arrangement 5 is employed as the driving--air cylinder thereof. In the cylinder having a multistage arrangement 5, a piston mechanism 52 is arranged inside a cylinder casing 51, another piston mechanism 53 is arranged inside the piston mechanism 52, and still another piston mechanism 54 is arranged inside the piston mechanism 53. The shaft of the piston mechanism 54 is connected to the finger-driving mechanism 1. Thus, the casing 51 and the piston mechanisms 52 and 53 form air cylinders independent of one another, the multistage air cylinder 5 is constructed of the three air cylinders is controlled independently of one another by solenoid valves $SV_8$ , $SV_9$ and $SV_{10}$.

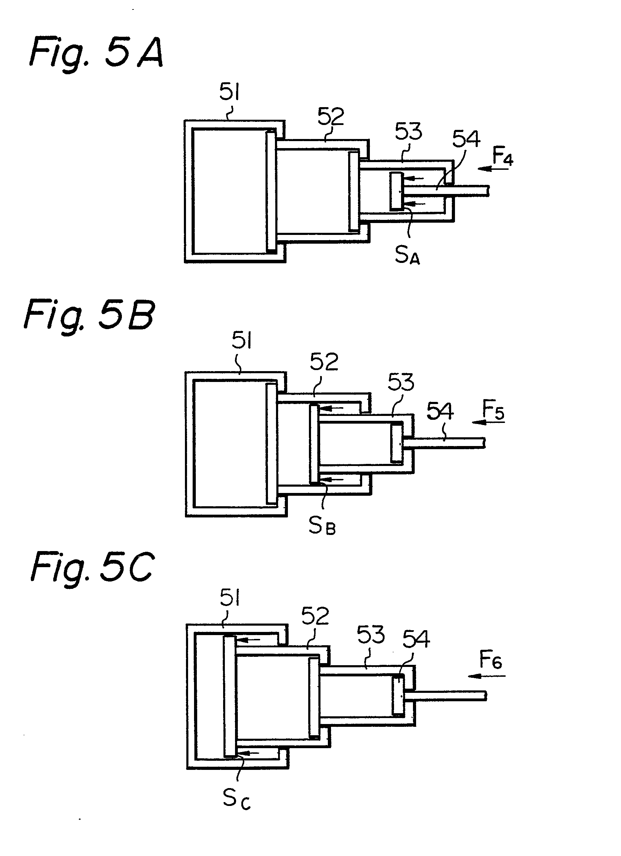

The modes in which the grasping force is switched in the hand of the industrial robot in Fig. 4 are illustrated in Fig. 5. In Figure 5(A), air is fed to only the first air cylinder mechanism having a pressure-receiving area $S_A$; in (B), the air is fed into only the second air cylinder having a pressure-receiving area $S_B$; and in (C), the air is fed to only the third air cylinder having a pressure-receiving area $S_C$. Supposing that $S_A < S_B < S_C$ and that $F_4$ , $F_5$ and $F_6$ denote the thrusts of the air cylinder 5 in (A), (B) and (C), respectively, these thrusts $F_4$ , $F_5$ and $F_6$ are expressed by the following:

$$F_4 = S_A \cdot P \cdot \eta$$
$$F_5 = S_B \cdot P \cdot \eta$$
$$F_6 = S_C \cdot P \cdot \eta$$

Here, $F_4 < F_5 < F_6$ holds, so that the grasping force of the hand can be switched in three stages.

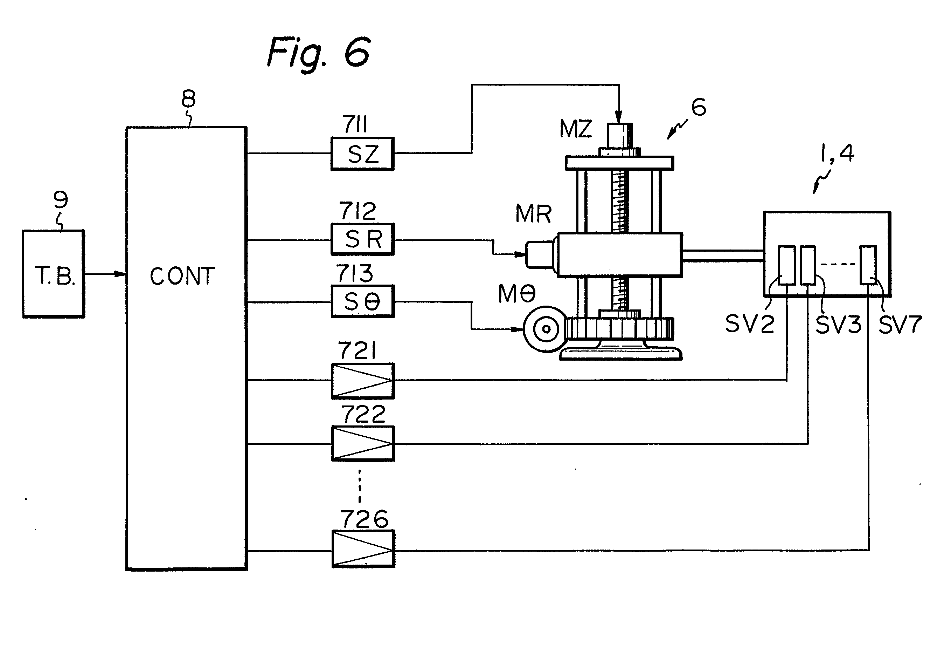

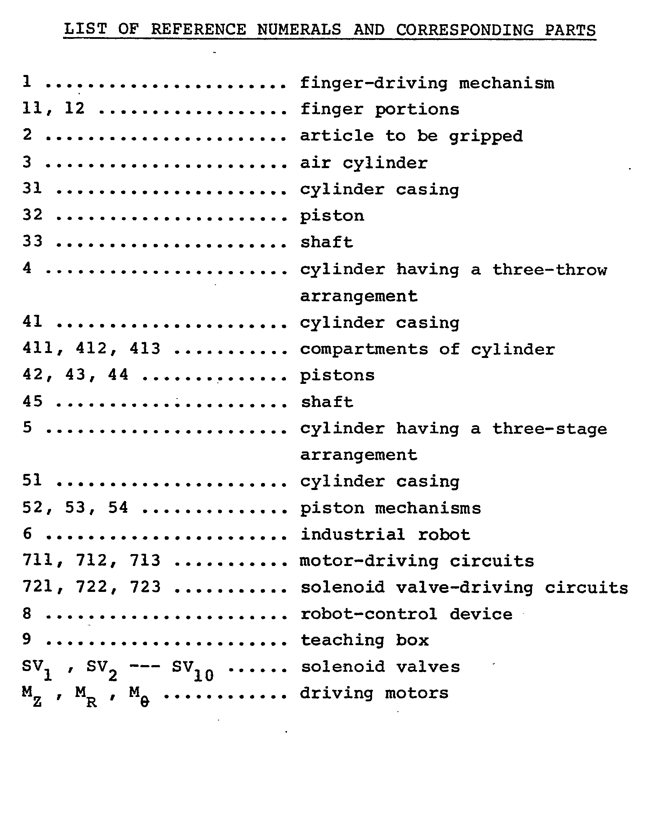

In Fig. 6, an industrial robot 6 having a hand according to the present invention as shown in Figure 2 and the control flow thereof are illustrated. The industrial robot 6 is controlled by a robot-control device (CONT) 8. In accordance with a teaching mode previously set in a teaching box (T. B.) 9, the robot-control device 8 controls the position of the hand 1, 4 and also controls the operations of the solenoid valves $SV_2$ , $SV_3$ , ... and $SV_7$ disposed in the hand, whereby not only the opening and closing operations of the hand 1, 4 can be controlled but also switching of the grasping force can be controlled. Accordingly, the grasping force of the hand can be preset in the teaching mode of the teaching box 9, depending upon the kind and state of the article to be gripped.

While the above-mentioned embodiments have been described as employing air as the pressure medium, it is also possible to employ a different fluid.

0062070

According to the present invention, there can be
provided a device for operating a hand of an industrial
robot in which the grasping force can be controlled
depending upon the stage of the article to be gripped.

## CLAIMS

1. A device for operating a hand of an industrial robot, comprising a fluid pressure cylinder as a driving mechanism of the hand of the industrial robot, said fluid pressure cylinder having a multi-throw or a multistage arrangement, fluid supply to said cylinder having a multi--throw or multistage arrangement varying in accordance with the grasping force selected in a teaching mode of said industrial robot, whereby the grasping force of said hand is adapted so that it can controlled stepwisely.

2. A device as defined in claim 1, wherein

said hand of an industrial robot comprises a finger-driving mechanism,

said finger-driving mechanism comprising a cylinder having a three-throw arrangement consisting of three partitioned compartments,

the pistons of said three compartments being connected by a common shaft, and

the air supplied to said three compartments being controlled by the corresponding plural solenoid valves.

3. A device as defined in claim 1, wherein

said hand of an industrial robot comprises a finger-driving mechanism,

said finger-driving mechanism comprising a fluid pressure cylinder having a multistage arrangement,

said fluid pressure cylinder having a multistage arragement being such that:

a second piston mechanism is arranged within the cylinder casing of the first piston mechanism,

a third piston mechanism is arranged within said second piston mechanism,

a fourth piston mechanism is arranged within said third piston mechanism,

the shaft of said fourth piston mechanism is connected to said finger-driving mechanism,

the air cylinders of said first, second and third piston mechanisms constitute independent air cylinders, and

the air supplied to said air cylinders is controlled independently by the corresponding plural solenoid valves.

4. A device as defined in claim 1, further comprising:

a teaching box;

a robot-controlling means receiving a signal from said teaching box;

Z-, θ-, and R-motion-driving circuits receiving motor-driving signals from said robot-control device;

motors for driving Z-, θ-, and R-motions of said industrial robot, said motors receiving the output signals of said Z-, θ-, and R-motion-driving circuits;

first through sixth solenoid valve-driving circuits receiving solenoid valve-driving signals from said robot-controlling means; and

first through sixth solenoid valves for said industrial robot hand, said solenoid valves receiving the output signals of said first through sixth solenoid valve-driving circuits, respectively.

*Fig. 1*

# Fig. 2

0062070

**Fig. 3A**

**Fig. 3B**

**Fig. 3C**

# Fig. 4

*Fig. 5 A*

51  52  53  54  F₄  S_A

*Fig. 5B*

51  52  53  54  F₅  S_B

*Fig. 5C*

51  52  53  54  F₆  S_C

# Fig. 6

## LIST OF REFERENCE NUMERALS AND CORRESPONDING PARTS

1 ..................... finger-driving mechanism

11, 12 .................. finger portions

2 ...................... article to be gripped

3 ...................... air cylinder

31 ..................... cylinder casing

32 ..................... piston

33 ..................... shaft

4 ...................... cylinder having a three-throw
                           arrangement

41 ..................... cylinder casing

411, 412, 413 ........... compartments of cylinder

42, 43, 44 ............... pistons

45 ..................... shaft

5 ...................... cylinder having a three-stage
                           arrangement

51 ..................... cylinder casing

52, 53, 54 ............... piston mechanisms

6 ...................... industrial robot

711, 712, 713 ........... motor-driving circuits

721, 722, 723 ........... solenoid valve-driving circuits

8 ...................... robot-control device

9 ...................... teaching box

$SV_1$ , $SV_2$ --- $SV_{10}$ ...... solenoid valves

$M_Z$ , $M_R$ , $M_\theta$ ............. driving motors

# INTERNATIONAL SEARCH REPORT

International Application No PCT/JP81/00370

## I. CLASSIFICATION OF SUBJECT MATTER (if several classification symbols apply, indicate all)

According to International Patent Classification (IPC) or to both National Classification and IPC

Int. Cl.³ B25J 15/00

## II. FIELDS SEARCHED

### Minimum Documentation Searched

| Classification System | Classification Symbols |
|---|---|
| I P C | B25J 15/00 |

### Documentation Searched other than Minimum Documentation to the Extent that such Documents are Included in the Fields Searched

Jitsuyo Shinan Koho       1961 – 1981

Kokai Jitsuyo Shinan Koho      1971 – 1981

## III. DOCUMENTS CONSIDERED TO BE RELEVANT

| Category* | Citation of Document, with indication, where appropriate, of the relevant passages | Relevant to Claim No. |
|---|---|---|
| Y | JP,A, 48-7448 (Komatsu Ltd.) 30, January, 1973 (30.01.73) | 1 – 4 |
| A | JP,A, 54-131255 (Yamatake-Honeywell Co., Ltd.) 12, October, 1979 (12.10.79) | 3 – 4 |

"Y" document of particular relevance; the claimed invention cannot be considered to involve an inventive step when the document is combined with one or more other such documents, such combination being obvious to a person skilled in the art

"A" document defining the general state of the art which is not considered to be of particular relevance

* Special categories of cited documents:

"A" document defining the general state of the art
"E" earlier document but published on or after the international filing date
"L" document cited for special reason other than those referred to in the other categories
"O" document referring to an oral disclosure, use, exhibition or other means

"P" document published prior to the international filing date but on or after the priority date claimed
"T" later document published on or after the international filing date or priority date and not in conflict with the application, but cited to understand the principle or theory underlying the invention
"X" document of particular relevance

## IV. CERTIFICATION

| Date of the Actual Completion of the International Search | Date of Mailing of this International Search Report |
|---|---|
| December 25, 1981 (25.12.81) | January 18, 1982 (18.01.82) |

| International Searching Authority | Signature of Authorized Officer |
|---|---|
| Japanese Patent Office | |

Form PCT/ISA/210 (second sheet) (October 1977)